# EUROPEAN PATENT APPLICATION

(11) **EP 4 807 604 A1**
(43) Date of publication of application: **16.09.2026**
(21) Application number: 26163813.4
(22) Date of filing: 10.03.2026
(51) Int. Cl.: G06F 21/57

(54) **RED TEAMING AI AGENT TO GENERATE EXPLOITS FOR TESTING CODE**

(30) Priority: 14.03.2025 US 202519080525
(71) Applicant: CrowdStrike Inc., Sunnyvale, CA 94086 (US)
(72) Inventor: URIAN, Paul-Danut, Sunnyvale, 94086 (US); GHITA, Alexandru-Constantin, Sunnyvale, 94086 (US); NECHITA, Mihai, Sunnyvale, 94086 (US); STOIAN, Ioana-Sabrina, Sunnyvale, 94086 (US)
(74) Representative: Murgitroyd & Company

(57) **Abstract**

An Artificial Intelligence (AI) agent described herein operates in at least one of a white box role or a black box role. In the white box role, the AI agent receives notification of a source code vulnerability, generates an exploit code for the vulnerability based on the source code and on at least one of context from past operations, large language model (LLM) predefined templates, or an embedding from an exploit code database, and provides that exploit code for testing on a patched code. In the black box role, the AI agent receives an indication of a target compiled code, generates an exploit code based on the target compiled code and on at least one of the context from past operations, the LLM predefined templates, or the embedding from the exploit code database, and provides that exploit code for testing on the target compiled code.

## Description

### BACKGROUND

Artificial Intelligence (AI) agents are increasingly used in the development of software. These tools develop dynamically-generated code at unprecedented rates. Like human-developed code, software built by AI agents has security flaws that need to be detected and patched. The traditional software development lifecycle, however, was designed around the capabilities of traditional, human-driven development and testing. While human software testers and tools can validate the security of AI-agent-developed code and prevent its malicious use, the scale and pace of dynamic code generation makes it difficult for human agents to keep up.

### BRIEF DESCRIPTION OF THE DRAWINGS

The detailed description is set forth with reference to the accompanying figures. In the figures, the left-most digit(s) of a reference number identifies the figure in which the reference number first appears. The use of the same reference numbers in different figures indicates similar or identical items or features.
FIG. 1 shows artificial intelligence (AI) agents to perform vulnerability tests on application code, to patch vulnerabilities, and to develop exploits to test patched code, as well as a testing block to validate found vulnerabilities and test patched code based on at least one of exploits or unit tests.
FIG. 2 shows AI agents to perform vulnerability tests on application code and to patch vulnerabilities, as well as a testing block to test patched code based on unit tests.
FIG. 3 shows an AI agent to develop exploit codes for testing target compiled code.
FIG. 4 shows a flowchart of an example process for an AI agent to perform a vulnerability scan on source code of an application and to notify other components of detected vulnerabilities.
FIG. 5 shows a flowchart of an example process for an AI agent to develop a patch for a source code vulnerability and to provide the patch to a testing block for testing based on at least one of a unit test or exploit-based test.
FIG. 6 shows a flowchart of an example process for an AI agent to receive notification of a source code vulnerability and to generate an exploit code for use in testing a patch for the vulnerability.
FIG. 7 shows a flowchart of an example process for an AI agent to receive an indication of target compiled code that the AI agent lacks source code for and to generate an exploit code for testing the target compiled code.
FIG. 8 shows an example system architecture for a computing device that is capable of implementing AI agents for testing application code.

### DETAILED DESCRIPTION

This disclosure is directed in part to artificial intelligence (AI) agents capable of detecting vulnerabilities in applications, confirming or denying vulnerabilities through testing (e.g., exploit-based testing), patching those vulnerabilities, and testing those patches. When coupled with other AI agents that dynamically generate application code, the result may be a fully automated software development lifecycle.

The AI agents disclosed herein may be used with any sort of application code, however, whether human developed or AI generated. Three examples of such security-relevant AI agents are described herein: a "blue" AI agent for vulnerability scanning, a patching AI agent for developing patches for source code vulnerabilities, and a "red" AI agent for generating exploit code to test compiled code of the application. These three agents may work together or may be used separately to test and fix applications.

As used herein, "blue" refers to "blue teaming", a term in the computer security world for a group of individuals that identify and fix security vulnerabilities in application code. "Red" refers to "red teaming", a term in cybersecurity that means testing compiled application code from the outside as an attacker would, through some sort of security exploit.

In various implementations, a blue AI agent may receive source code of an application. The receipt may be triggered by the addition of the source code to a repository, triggered by a build of the source code, operated on demand, etc. Based on information about the application and on a large language model (LLM) of the blue AI agent, the blue AI agent may select one or more source code analysis tools and perform vulnerability scan(s) of the source code with those tool(s). The blue AI agent may then notify at least one of the patching AI agent or the red AI agent of the vulnerability to enable patching and testing. Upon receiving results from the patching or testing, the blue AI agent may learn, e.g., whether the identified vulnerability was an actual vulnerability, whether the selected source code analysis tool(s) had high or low false positives for, e.g., an application type of the application scanned, etc.

A patching AI agent may be triggered by receiving notification of a vulnerability from, e.g., a red AI agent. Upon receiving notification, the patching AI agent may retrieve the source code and, e.g., confirm that the vulnerability is, in fact, a vulnerability by providing the vulnerable source code (and, optionally, a unit test) to a testing block. The testing block may validate the vulnerability through use of a unit test and/or exploit code. The patching AI agent may also generate patched code for the vulnerability and a unit test to test the patched code. In some implementations, the patched code and unit test may be provided to the testing block to test the patched code. The testing block may also obtain a compiled version of the patched code and test the compiled version with exploit code provided by the red AI agent. When the patched code passes the test, the blue AI agent may obtain the patched code and repeat the vulnerability scanning described herein. When the patched code fails to pass the test, the patching AI agent may generate a new patched code and repeat the testing. The patching AI agent may also learn from results of the testing by the testing block.

In some implementations, the red AI agent may operate in a white box role or a black box role. As used herein, "white box" refers to development when the source code and related information for a target are available to the process interacting with that target. "Black box" refers to the opposite situation - use or interaction with target application code without having the source code or related information for the target be available.

When operating in a white box role, the red AI agent may receive notification of a vulnerability of source code of an application. Based on that source code as well as other information, the red AI agent may generate an exploit code to run on a compiled version of the application. The other information used in generating the exploit code may include context from prior operations (e.g., previous iterations of vulnerability scanning and testing of source code), information from reconnaissance, LLM predefined templates, or information from a database of exploit codes. The red AI agent may then provide the exploit code to the testing block for testing on a compiled version of the source code or of a compiled, patched version of the source code.

When operating in a black box role, the red AI agent may have a target compiled code to test but may lack the source code for that target compiled code and lack a list of vulnerabilities identified in a previous source code scan. Upon receiving the target compiled code or a location for that code, the red AI agent may perform reconnaissance on the target compiled code (e.g., performing a port scan on the target compiled code, analyzing user interface(s) of the target compiled code to identify whether they include a login/authentication feature, etc. Based on the results of the reconnaissance, on LLM predefined templates, and/or on an exploit database, the red AI agent may generate an exploit code to test on the target compiled code. If the target compiled code fails the test - e.g., the exploit code is successful, the red AI agent may notify a human analyst. Also or instead, upon a successful exploitation, the red AI agent may notify the blue AI agent to create a specific signature for the source code scanning tool to target the newfound vulnerability.

In various implementations, different combinations of the AI agents may be used together to identify, test, and/or fix vulnerabilities in application code. For example, the blue AI agent, patching AI agent, and red AI agent operating in a white box role may work together to comprehensively identify all vulnerabilities, patch those vulnerabilities, and test the patches in an iterative fashion until no vulnerabilities can be found. In another example, the blue AI agent and patching AI agent may work together to a similar end, but without the aid of exploit-based testing of patched code. In a further example, the red AI agent in a black box role may be used on its own to test various target applications for vulnerabilities.

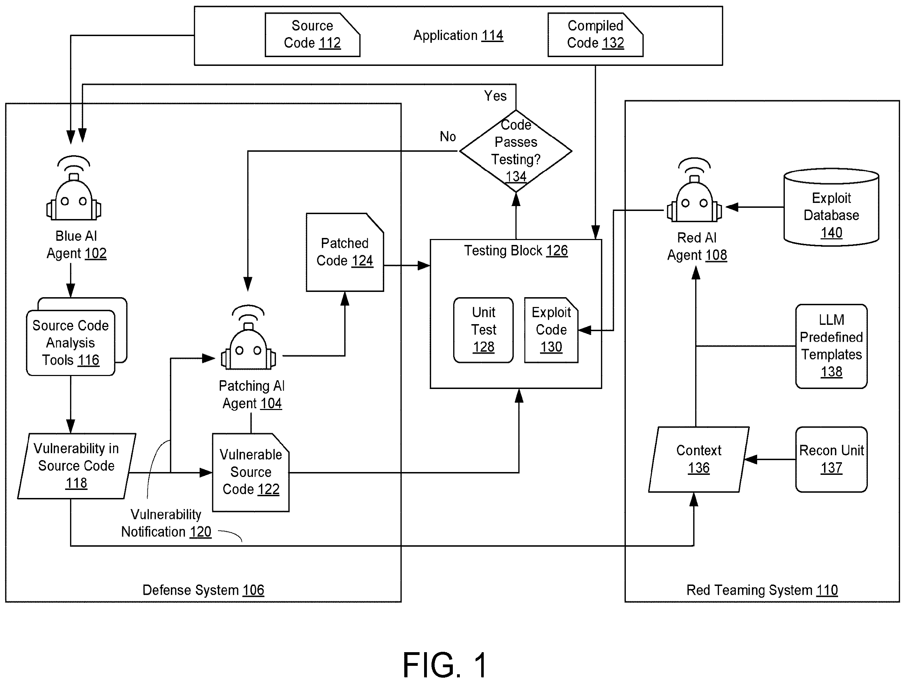

FIG. 1 shows AI agents to perform vulnerability tests on application code, to patch vulnerabilities, and to develop exploits to test patched code, as well as a testing block to validate found vulnerabilities and test patched code based on at least one of exploits or unit tests. As illustrated, a blue AI agent 102 and a patching AI agent 104 may be included in a defense system 106, and a red AI agent 108 may be included in a red teaming system 110. The blue AI agent 102 may receive source code 112 of an application 114 and may perform a vulnerability scan of the source code 112 using one or more source code analysis tools 116. As a result, the blue AI agent 102 may identify a vulnerability 118 in the source code 112 and provide a notification 120 of the vulnerability 118 to the patching AI agent 104 and to the red teaming system 110. The patching AI agent 104 may retrieve the vulnerable source code 122, verify the vulnerability, and develop patched code 124 for the vulnerable source code 122. The patching AI agent 104 may provide the patched code 124 to a testing block 126 for testing. The testing block 126 may utilize a unit test 128 (e.g., from the patching AI agent 104) and/or an exploit code 130 from the red AI agent 108. The testing block 126 may also receive a compiled version of the patched code 124 to test with the exploit code 130. At 134, it may then be determined whether the patched code 124 passes testing, with iterations by the blue AI agent 102 when the patched code 124 passes and by the patching AI agent 104 when the patched code 124 does not pass. As further shown, to generate the exploit code 130 used by the testing block 126, the red AI agent 108 may utilize context 136 from past operations, LLM predefined templates 138, and an exploit database 140.

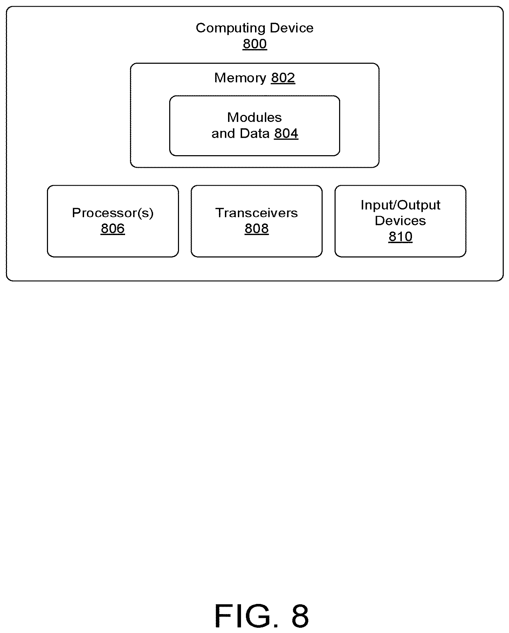

No computing device is illustrated in FIG. 1. It is to be understood, however, that components such as the blue AI agent 102, patching AI agent 104, red AI agent 108, application 114, source code analysis tools 116, testing block 126, LLM predefined templates 138, exploit database 140, etc. may be implemented by one or more computing devices. In some examples, the defense system 106 and red teaming system 110 may each represent a computing device; in other examples, the defense system 106 and red teaming system 110 may simply be architectural abstractions or code environments. The one or more computing device(s) may be physical computing device(s) or a virtual computing device(s) (also referred to herein as "virtual machines"). For example, the one or more computing device(s) may each be a computer, a workstation, a mobile computing device, an Internet of Things (IoT) device, a server, a cloud computing resource, a virtual computing element such as a container, a network element such as a gateway or a firewall, and/or any other type of computing device or computing system. An example computing device capable of serving as one of the one or more computing device(s) is illustrated in FIG. 8 and described further herein with reference to that figure.

The computing device(s) may be connected by any sort of public or private network with each other and/or with other computing devices. The various devices of the network may be connected by wired mechanisms, wireless mechanisms, or both. The network may also allow access to an external network, such as the Internet, through gateway or firewall devices that provide access controls for incoming connections.

Each of the AI agents 102, 104, and 108 operating on the computing device(s) may be an instance of an AI agent asked to play a different role and have a different purpose, with the role and purpose informing system prompt(s) of the AI agents 102, 104, and 108. Along with the system prompt(s) and task prompt(s), and each of the AI agents 102, 104, and 108 may start with a same or different LLM, such as an LLM of an entity operating the computing device(s) and network and trained on data of the entity. For example, if the entity is a cybersecurity service provider, the LLM may be trained on cybersecurity data to identify vulnerabilities, threats, and exploits. In some instances, each of the AI agents 102, 104, and 108 may start with an LLM customized for its role, trained with relevant data to assist the respective AI agent instance in performing the role it is asked to perform. As used herein, a role may represent a title in a team of agents that is tied to typical roles in a software engineering team. A "purpose" may be a detailed description of what the agent's job is in the context of the team. The system prompt formed by the role and purpose establishes the context in which the LLM forms its responses. The task prompt tells the LLM specifically what to do, providing the LLM with additional capabilities. In addition to the prompts and LLM, the agents 102, 104, and 108 may also rely on available tools and a RAG component. The available tools may be parametrized functions that perform simple tasks, e.g. (file reading, directory traversal, command execution, etc.) and the LLM may decide which tools to use and which parameters to be called with those tools. The retrieval-augmented generation (RAG) component may supplement the foundational model with extra knowledge that is vectorized and stored in a vector database and would be retrieved based on similarity with the current task.

In various implementations, the blue AI agent 102 may be an AI agent instance asked to perform a "senior vulnerability and security researcher" role with a purpose that result in a blue AI agent 102 that is able to understand source code 112, application 114, and related information, know the source code analysis tools 116 and which of these may be a best fit for the source code 112/application 114, invoke that/those source code analysis tool(s) 116 to perform vulnerability scan(s), and when a vulnerability 118 is identified, notify 120 other AI agents 104 and 108. The role and purpose may also enable the blue AI agent 102 to learn from results of the vulnerability scanning. For example, when the vulnerability 118 is tested by the patching AI agent 104 or testing block 126 and found to be a false positive, the blue AI agent 102 may decrease a weight in a model (e.g., LLM) that led to the selection of the source code analysis tool 116 that identified the vulnerability.

In some implementations, the blue AI agent 102 may respond to triggers tied to code repositories, applications, or both. For example, when source code 112 is added to a repository (e.g., GitHub^{™}, BitBucket^{™}), or when a build is performed for the application 114, the blue AI agent 102 may take note of the change and retrieve the source code 112. In some examples, the blue AI agent 102 may also retrieve other information associated with the application 114, such as a ReadMe document, reviews of application 114, social media comments and discussions of application 114, etc.

Having received or retrieved the source code 112 and any related information for the application 114, the blue AI agent 102 may identify one or more source code analysis tools 116 as best fit(s) for, e.g., the application type of application 114, for certain features noted in the source code 112 (e.g., source code for authentication, etc.). The source code analysis tools 116 may each be a static application security testing (SAST) tool that can identify vulnerabilities 118 in the source code 112. Once the blue AI agent 102 has selected the one or more source code analysis tools 116, the blue AI agent 102 may perform vulnerability scan(s) using the source code analysis tool(s) 116 and identify vulnerabilities, such as the vulnerability 118.

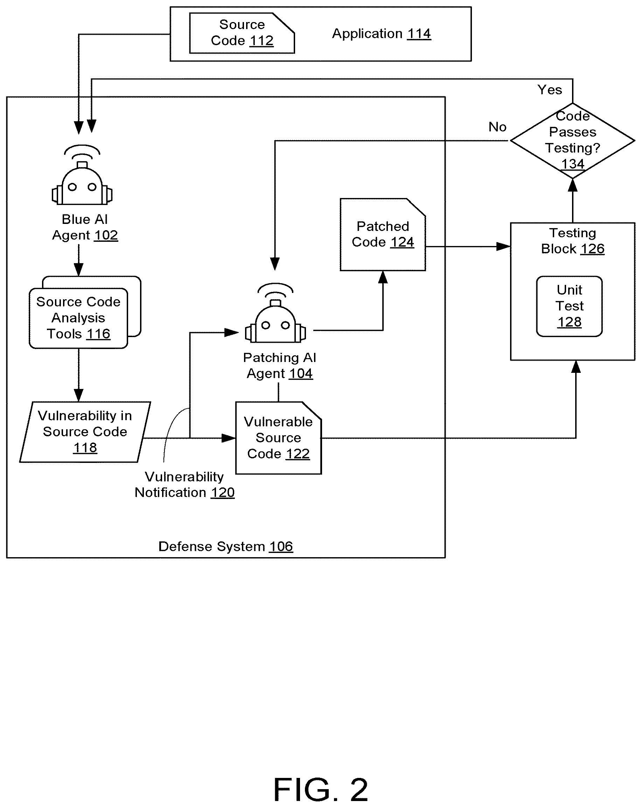

Based on its knowledge of other AI agents, the blue AI agent 102 may provide a notification to both the patching AI agent 104 and the red AI agent 108 (as in FIG. 1), or only to the patching AI agent 104 (as in FIG. 2).

In some implementations, the blue AI agent 102 may receive feedback from the patching AI agent 104 or testing block 126 on whether the vulnerability 118 is false positive or a true vulnerability. Based on this, the blue AI agent 102 may adjust weights in models used for selecting the source code analysis tools 116, increasing weights for source code analysis tools 116 that have successfully identified vulnerabilities and decreasing weights for source code analysis tools 116 that have generated false positives.

After patched code 124 has passed testing, the blue AI agent 102 may receive that patched code 124 and repeat the operations on that patched code 124 that were performed for source code 112. Such iterations may continue to repeat until no vulnerabilities are identified by the blue AI agent 102.

In various implementations, the patching AI agent 104 may be an AI agent instance asked to perform a role with a purpose that results in a patching AI agent 104 that is able to receive notifications 120 of vulnerabilities 118, generate unit tests 128 to confirm vulnerabilities 118 and/or test patched code 124, develop patched code 124 for a vulnerabilities 118, and provide patched code 124 to a testing block 126 for testing. The patching agent 104 might have access to information about the previously failed instances and it might refine its future answers based on this data via in-context learning.

In some implementations, the patching AI agent 104 may be triggered by receiving a notification 120 of a vulnerability 118 in source code 112. Such a notification 120 may include specifics of the vulnerability 118, such as a specific line of code or module of the source code 112, details of an exploit that the vulnerability 118 allows, etc.

Upon receiving a notification 120, the patching AI agent 104 may first generate a unit test 128 to verify that the vulnerability 118 is a real vulnerability and not a false positive. Once the unit test 128 has been generated, the patching AI agent 104 may provide the vulnerable source code 122 (which may be the same as source code 112 or a subset of source code 112) with the unit test 128 to the testing block 126 for testing. In some examples, the validation at the testing block 126 may also utilize a compiled version 132 of the vulnerable source code 122 for testing by exploit code 130.

In various implementations, the testing block 126 may be separate from the defense system 106 and red teaming system 110, part of both systems 106 and 110, or part of only one of the systems 106 and 110. The testing block 126 may be a system or component that is able to test source code and compiled code with unit tests 128 and exploit codes 130, respectively. In some implementations, the decision operation shown at 134 may be part of the testing block 126 or may be a separate component or system.

With the unit test 128 for the vulnerability 118 and the vulnerable source code 122, the patching AI agent 104 or testing block 126 may determine whether the vulnerability 118 is confirmed. Regardless of whether the vulnerability 118 is confirmed, the blue AI agent 102 may be notified of the result to enable learning. If the vulnerability 118 is a false positive, processing may revert to the blue AI agent 102 to perform further analysis of the source code 112. If the vulnerability is confirmed, the patching AI agent 104 may develop a patched code 124 for the vulnerability.

Developing the patched code 124 may involve reference to an LLM of the patching AI agent 104 or other code development resources. It may take as input the notification 120, which may specify the line or lines of code that have the vulnerability 118, and the vulnerable source code 122. The patched code 124 may, in some examples, only be the new code that replaces the vulnerable line or lines. In other examples, the patched code 124 may include both the new, replacement code and surrounding code.

In addition to developing the patched code 124, the patching AI agent 104 may develop a unit test 128 for the patched code 124. The patching AI agent 104 may then provide both the patched code 124 and unit test 128 to the testing block 126 for testing.

The testing block 126, upon receiving the patched code 124 and unit test 128 may simply perform the unit test 128 on the patched code (as in FIG. 2) or may also or instead execute an exploit code 130 on a compiled version 132 of the patched code 124 (as in FIG. 1). The testing block 126 may query the red AI agent 108 for the exploit code 130 or may simply retrieve and execute it if the exploit code 130 is received. Further, the testing block 126 may determine if a compiled version 132 has been prepared, may request that a compiled version 132 may prepared, or may simply determine whether it (the testing block 126) has received a compiled version 132. When the testing block 126 has both the compiled version 132 and an exploit code 130, the testing block 126 may execute the exploit code 130 on the compiled version 132 to determine whether the compiled version 132 retains the vulnerability 118. In some examples, the testing block 126 may both execute the exploit code 130 and perform the unit test 128. If the patched code 124 (or its compiled version 132) fails a test (either the unit test 128 or the exploit code 130), the patched code 124 may be deemed to have failed. At decision block 134, then, if either test is failed, control may revert to the patching AI agent 104 to generate a further patched code 124. If the patched code 124 passes whatever tests are used (either or both of the unit test 128 and exploit code 130), then following decision block 134 the control may revert to the blue AI agent 102 to scan the source code 112, modified with the patched code 124, for further vulnerabilities. Also following the completion of the test(s), the testing block 126 may provide results of the test(s) to the patching AI agent 104 to enable the patching AI agent 104 to learn from results of the tests. For example, the patching AI agent 104 may increase or decrease weights in one or more models used in generating patched codes based on whether the patched code 124 overcame the vulnerability 118.

In some implementations, if vulnerabilities are found more than a first threshold number of times or new patches attempted more than a second threshold number of times, the patching AI agent 104 or other component of the defense system 106 may alert a human agent,

In various implementations, for each patched code 124 that passes tests by the testing block 126, the patching AI agent 104 may apply the patched code 124 to the source code 112 or recommend the patched code 124 to a human agent to enable the human agent to decide whether or not to update the source code 112 with the patched code.

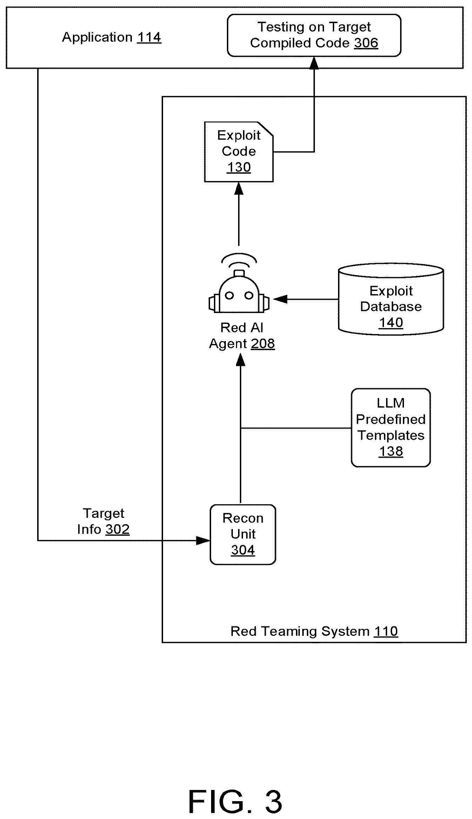

In various implementations, the red AI agent 108 may be an AI agent instance asked to perform a role with a purpose that result in a red AI agent 108 that is able to receive a notification 120 of a vulnerability 118 in source code 112 (as in FIG. 1) or receive information about target compiled code (as in FIG. 3), generate an exploit code 130 based on one or more of context 136, LLM predefined templates138, or exploit database 140, and provide the exploit code 130 for testing. The role and purpose may also enable the red AI agent 108 to learn from results of the exploit testing. For example, when the exploit code 130 fails to identify a vulnerability when testing a compiled version 132 of patched code 124 but the unit test 128 identifies such a vulnerability, the red AI agent 108 may increase or decrease weights in one or more models (e.g., an LLM of the red AI agent 108) used in generating the exploit code 130. In some implementations, the red AI agent 108 may also learn emerging security threats from other resources, etc.

As described herein, the red AI agent 108 may operate in a white box role or a black box role. The white box role is shown in FIG. 1 and is described with reference to that figure. In the white box role, the red AI agent 108 may be triggered by receiving a notification 120 from the blue AI agent 102 about a vulnerability 118 in source code 112. Because the red AI agent 108 is operating in a white box role, the source code 112 and related information (e.g., a ReadMe) are available to the red AI agent 108, along with information in the notification 120 (e.g., identification of the line(s) in the source code 112 that have the vulnerability). The red AI agent 108 may also utilize context 136. The context 136 may be information from past operations (e.g., previous iterations through the source code 112 of the application 114) that identify what exploit codes 130 have been successful and what exploit codes 130 have not been successful. Further, the red AI agent 108 may use a reconnaissance unit 137 to perform reconnaissance (i.e., gather information) about the source code and vulnerabilities, etc. For example, the reconnaissance unit 137 may perform a port scan of a compiled version of the source code to identify open ports that may be associated with exploits. In additional examples, the reconnaissance unit 137 may analyze a user interface of the compiled version to see if it includes a login or authentication feature. The LLM predefined templates 138 utilized by the red AI agent 108 may be predefined prompts that aid the red AI agent 108 in generating successful exploit code (e.g if the found vulnerability is tied to SQLInjection, a prompt may be constructed that has a couple of payloads). Further, the exploit database 140 may be an internal or external database of security exploits and may be represented by an embedding layer to enable identification of most similar exploits. In some examples, the exploit database 140 may be accessed through or be an additional source with a RAG system. The red AI agent 108 may give different weights to different ones of these resources or may be configured to use certain resources in certain situations (e.g., with different application types). The result, regardless, is the generation of an exploit code 130 by the red AI agent 108.

The red AI agent 108 then provides the exploit code 130 to the testing block 126 for testing a compiled version 132 of the vulnerable source code 122 or of the patched code 124. As previously mentioned, the exploit code 130 may be sent automatically to the testing block 126 or may be retrieved by the patching AI agent 104 or by the testing block 126. The red AI agent 108 may receive results of the testing (e.g., successfully attacked vulnerable code or failed to attack vulnerable code) and may learn based on the results and generate future exploit codes accordingly. For example, the red AI agent 108 may learn from the test results to associate or not associate tuples of the vulnerability 118 with code such as exploit code 130. In some implementations, the red AI agent 108 may also learn emerging security threats from other resources, etc.

FIG. 2 shows AI agents to perform vulnerability tests on application code and to patch vulnerabilities, as well as a testing block to validate vulnerabilities and test patched code based on unit tests. As illustrated, FIG. 2 includes all components of the defense system 106 from FIG. 1 as well as the testing block 126, unit test 128, and decision block 134 from that figure. FIG. 2 omits the red teaming system 110, exploit code 130, and compiled version 132 of the patched code 124. FIG. 2 then shows a system in which the components, data, and operations are capable of identifying and patching vulnerabilities, as well as unit testing those vulnerabilities and patches, but not of simulating external attacks with exploits - such is the contribution of the red teaming system, which is not included.

From the perspective of the blue AI agent 102, everything works the same in the system of FIG. 2 as was described above with respect to FIG. 1 except that there is one less other AI agent (red AI agent 108) to provide the notification 120 to. Rather, once the vulnerability 118 is identified, a notification 120 is sent only to the patching AI agent 104.

The patching AI agent 104, however, provides the vulnerable source code 122 and its patched code 124 for testing to a testing block 126 which only utilizes the unit test 128 generated by the patching AI agent 104. The decision block 134 may consider only the result of that unit test 128 in determining whether the vulnerable source code 122/patched code 124 has passed test(s).

FIG. 3 shows an AI agent to develop exploit codes for testing target compiled code. As illustrated in FIG. 3, an application 114 may be tested even when its source code 112 is not available (whether because it is withheld for testing purposes or because it just happens, incidentally, to be unavailable). To test the application 114 in these circumstances, the red AI agent 108 of the red teaming system 110 operates in the black box role described further herein. In this role, there is no involvement from the defense system 106 or its components.

As shown in FIG. 3, the red AI agent 108 may be triggered by receipt of information 302 about target compiled code - e.g., compiled code of application 114. The information 302 may be a uniform resource location (URL) of a site hosting the application 114, a network address of a repository, etc.

Upon receiving the information 302, the red AI agent 108 may use a reconnaissance unit 304 to perform reconnaissance (i.e., gather information) about the target compiled code, such as vulnerabilities of the target compiled code, etc. For example, the reconnaissance unit 304 may perform a port scan of the target compiled code to identify open ports that may be associated with exploits. In additional examples, the reconnaissance unit 304 may analyze a user interface of the target compiled code to see if it includes a login or authentication feature.

In various implementations, the red AI agent 108 may utilize the results of the reconnaissance unit 304, along with the LLM predefined templates 138, and the exploit database 140 to generate an exploit code 130. The LLM predefined templates 138 utilized by the red AI agent 108 may involve predefined prompts and the exploit database 140 may be an internal or external database of security exploits. The exploit database 140 may be represented by an embedding layer to enable identification of most similar exploits and be accessed through or be an additional source with a RAG system. The red AI agent 108 may give different weights to different ones of these resources or may be configured to use certain resources in certain situations. The result, regardless, is the generation of an exploit code 130 by the red AI agent 108.

At 306, the red AI agent 108 may then test or provide for testing the exploit code 130 on the target compiled code of the application 114. When the exploit code 130 is successful in finding a vulnerability, the red AI agent 108 may notify a human agent of the vulnerability.

The red AI agent 108 may receive results of the testing (e.g., successfully attacked vulnerable code or failed to attack vulnerable code) and may learn based on the results and generate future exploit codes accordingly. The red AI agent 108 may also learn based on updates from other resources about emerging security exploits.

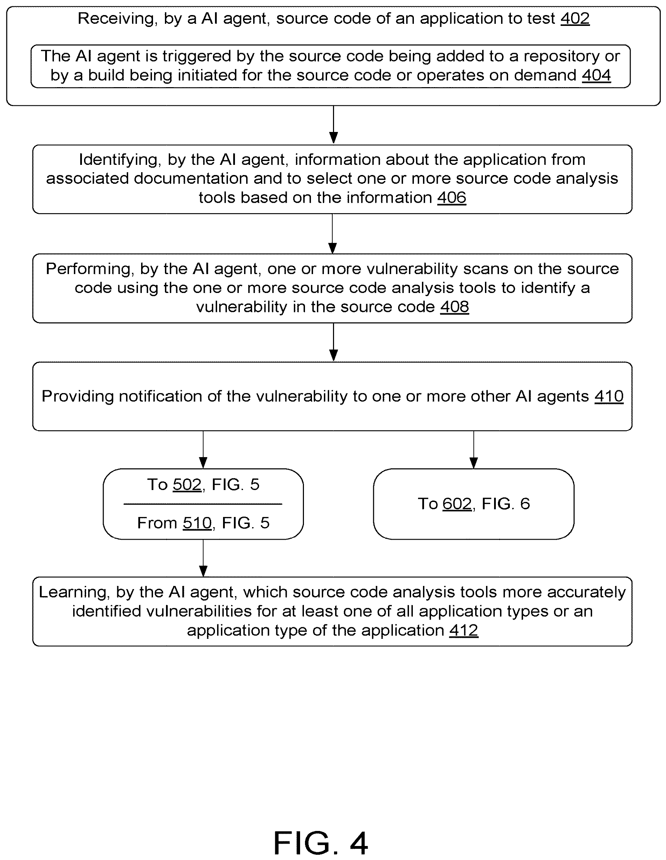

FIGs. 4-7 illustrate example processes. These processes are illustrated as logical flow graphs, each operation of which represents a sequence of operations that can be implemented in hardware, software, or a combination thereof. In the context of software, the operations represent computer-executable instructions stored on one or more computer-readable storage media that, when executed by one or more processors, perform the recited operations. Generally, computer-executable instructions include routines, programs, objects, components, data structures, and the like that perform particular functions or implement particular abstract data types. The order in which the operations are described is not intended to be construed as a limitation, and any number of the described operations can be omitted or combined in any order and/or in parallel to implement the processes. The example processes shown in FIGs. 4-7 may be performed by components and devices such as those shown and described with respect to FIG. 8.

FIG. 4 shows a flowchart of an example process for an AI agent to perform a vulnerability scan on source code of an application and to notify other components of detected vulnerabilities. In some examples, the AI agent performing the operations of FIG. 4 may be an example of the blue AI agent 102.

At 402, the AI agent may receive source code of an application to test. At 404, the receiving may include being triggered by the source code being added to a repository, triggered by a build being initiated for the source code, or operated on demand.

At 406, the AI agent may identify information about the application from associated documentation and select the one or more source code analysis tools based on the information.

At 408, the AI agent may perform one or more vulnerability scans on the source code using one or more source code analysis tools (e.g., the selected one or more source code analysis tools) to identify a vulnerability in the source code.

At 410, the AI agent may provide notification of the vulnerability to one or more other AI agents (e.g., the patching AI agent 104 and/or the red AI agent 108).

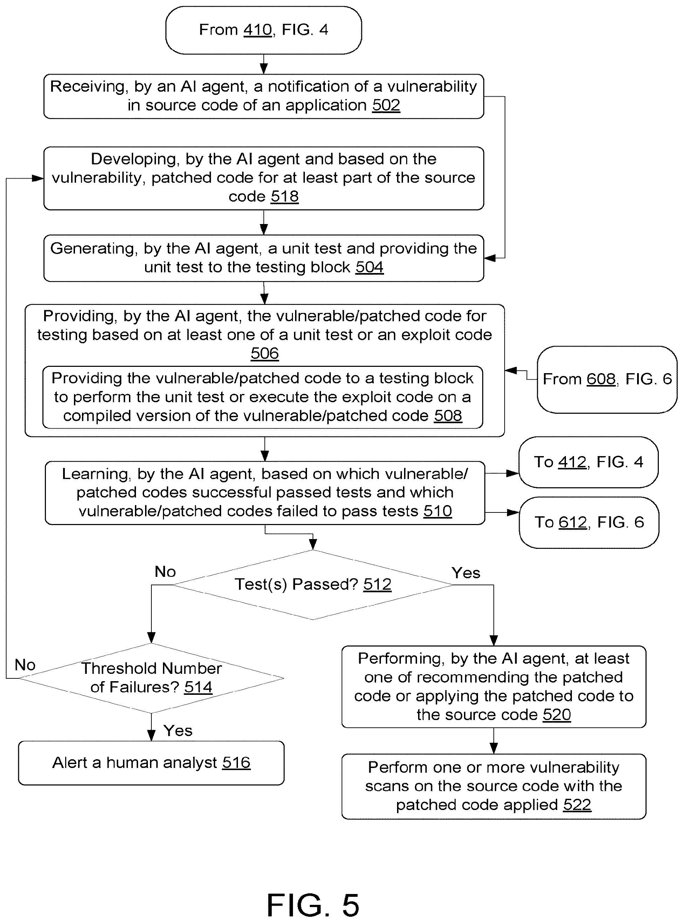

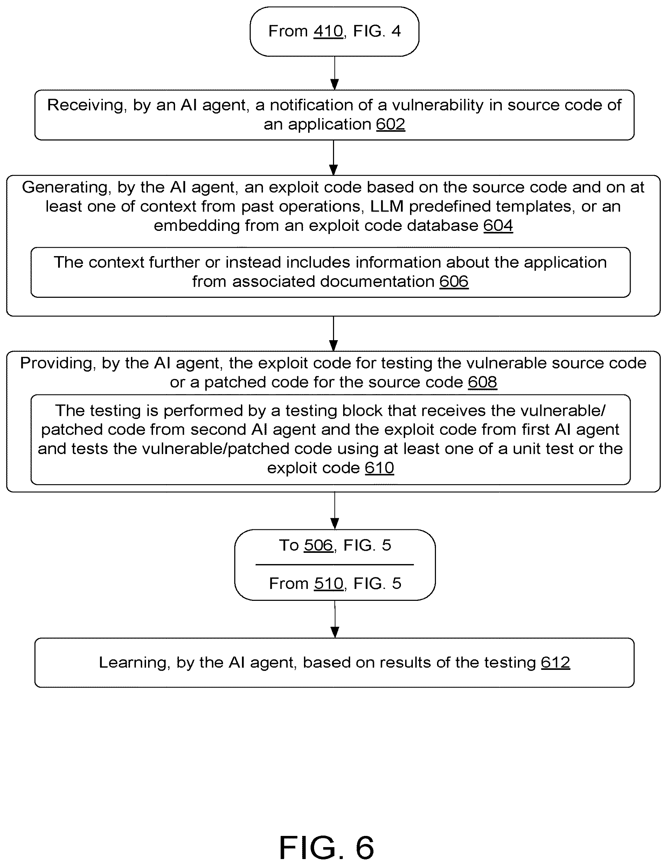

As shown in FIG. 4, the providing at 410 may connect to operation 502 of FIG. 5 and operation 602 of FIG. 6, with each of those operation noting the receipt of a notification such as the notification provided at 410.

At 412, the AI agent may learn which source code analysis tools more accurately identified vulnerabilities for at least one of all application types or an application type of the application. As shown in FIG. 4, that learning may be response to the results of the tests following operation 510 of FIG. 5

FIG. 5 shows a flowchart of an example process for an AI agent to provide vulnerable source code to a testing block for validation, to develop a patch for a source code vulnerability, and to provide the patch to the testing block for testing based on at least one of a unit test or exploit-based test. In some examples, the AI agent performing the operations of FIG. 5 may be an example of the patching AI agent 104.

At 502, the AI agent may receive a notification of a vulnerability in the source code of an application. As shown in FIG. 5, the notification received may be the notification provided at operation 410 of FIG. 4.

At 504, the AI agent may generate a unit test and provide the unit test to a testing block.

At 506, the AI agent may provide code for testing based on at least one of a unit test or an exploit code. In a first iteration through 506, the code may be the vulnerable source code. In a second iteration through 506, the code may be the patched source code. At 508, the providing may include providing the code to a testing block to perform a unit test (e.g., the unit test generated at 504) or execute the exploit code on a compiled version of the code. As shown in FIG. 5, the exploit code may be received from operation 608 of FIG. 6, which recites the providing of exploit code for testing on patched code.

At 510, the AI agent may learn based on which codes successful passed tests and which patched codes failed to pass tests. As shown in FIG. 5, the results of the tests may also lead to learning at operation 412 of FIG. 4 and operation 612 of FIG. 6.

At 512, the AI agent may take different actions based on whether the patched code has passed the test(s). If the patched code has not passed (the "NO" branch), the AI agent may, at 514, determine if there have been a threshold number of failures (e.g., vulnerabilities are found more than a first threshold number of times or new patches are attempted more than a second threshold number of times). If there have not been a threshold number of failures (the "NO" branch), operations move to 516, with the AI agent developing, based on the vulnerability, patched code for at least part of the source code. If there have been a threshold number of failures (the "YES" branch), the AI agent may alert, at 518, a human analyst.

Returning to the decision at 514, if the patched code has passed the test(s) (the "YES" branch), the AI agent may, at 520, perform at least one of recommending the patched code or applying the patched code to the source code. At 522, the AI agent may then perform one or more vulnerability scans on the source code with the patched code applied.

FIG. 6 shows a flowchart of an example process for an AI agent to receive notification of a source code vulnerability and to generate an exploit code for use in testing the vulnerability and/or in testing a patch for the vulnerability. In some examples, the AI agent performing the operations of FIG. 6 may be an example of the red AI agent 108.

At 602, the AI agent may receive a notification of a vulnerability in source code of an application. As shown in FIG. 6, the notification received may be the notification provided at operation 410 of FIG. 4.

At 604, the AI agent may generate an exploit code based on the source code and on at least one of context from past operations, LLM predefined templates trained on predefined prompts, or an embedding from an exploit code database. In some examples, the context from past operations may include results from reconnaissance performed on a compiled version of the source code. At 606, the context may further or instead include information about the application from associated documentation.

At 608, the AI agent may provide the exploit code for testing the vulnerable source code or a patched code for the source code. At 610, the testing may be performed by a testing block that receives the vulnerable/patched code from another AI agent and tests the vulnerable/patched code using at least one of a unit test and the exploit code.

As shown in FIG. 6, providing the exploit code may be followed by or contemporaneous with operation 506 of FIG. 5 in which the patched code is provided to the testing block for testing.

At 612, the AI agent may learn based on results of the testing. As shown in FIG. 6, that learning may be response to the results of the tests following operation 510 of FIG. 5.

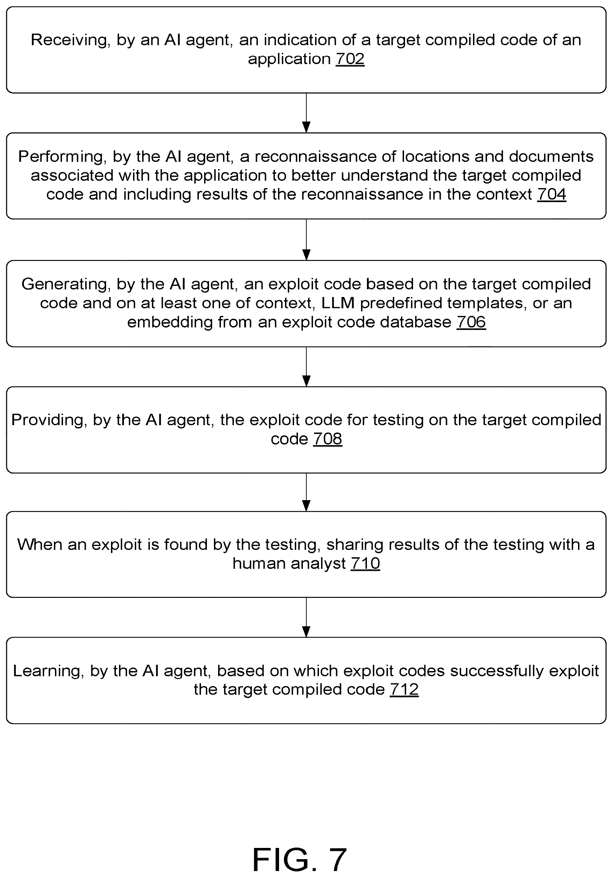

FIG. 7 shows a flowchart of an example process for an AI agent to receive an indication of target compiled code that the AI agent lacks source code for and to generate an exploit code for testing the target compiled code. In some examples, the AI agent performing the operations of FIG. 7 may be an example of the red AI agent 108.

At 702, the AI agent may receive an indication of a target compiled code of an application. In some implementations, the AI agent may not know source code corresponding to the target compiled code.

At 704, the AI agent may perform a reconnaissance of locations and documents associated with the application to better understand the target compiled code and including results of the reconnaissance in the context.

At 706, the AI agent may generate an exploit code based on the target compiled code and on at least one of context from past operations, LLM predefined templates, or an embedding from an exploit code database.

At 708, the AI agent may provide the exploit code for testing on the target compiled code.

At 710, when an exploit is found by the testing, the AI agent may share results of the testing with a human analyst.

At 712, the AI agent may learn based on which exploit codes successfully exploit the target compiled code.

FIG. 8 shows an example system architecture for a computing device that is capable of implementing AI agents for testing application code. The computing device 800 may include one or more computers, servers, mobile computing devices, or other types of computing devices that may execute one or more elements described herein. Additionally or alternatively, the computing device 800 may include virtual machine(s) operating on physical computing device(s), with the components and functionality of the computing device 800 distributed among one or more virtual machines, one or more physical computing devices, or a combination of both. As noted, the computing device 800 may implement any or all of the AI agents and components shown in FIGs. 1-3 and described further herein. Additionally, the computing device 800 may perform any or all of the operations shown in FIGs. 4-7 and described further herein.

The computing device 800 may include memory 802. In various examples, the memory 802 may include system memory, which may be volatile (such as RAM), non-volatile (such as ROM, flash memory, non-volatile memory express (NVMe), etc.) or some combination of the two. The memory 802 may further include non-transitory computer storage media, such as volatile and nonvolatile, removable and non-removable media implemented in any method or technology for storage of information, such as computer readable instructions, data structures, program modules, or other data. System memory, removable storage, and non-removable storage are all examples of non-transitory computer storage media. Examples of non-transitory computer storage media include, but are not limited to, RAM, ROM, EEPROM, flash memory or other memory technology, CD-ROM, digital versatile discs (DVD) or other optical storage, magnetic cassettes, magnetic tape, magnetic disk storage or other magnetic storage devices, or any other non-transitory medium which may be used to store desired information and which may be accessed by the computing device 800. Any such non-transitory computer storage media may be part of the computing device 800.

The memory 802 can include one or more software or firmware elements, such as computer-readable instructions that are executable by one or more processors. For example, the memory 802 can store computer-executable instructions associated with modules and data 804. The modules and data 804 can include a platform, operating system, applications, and data utilized by the platform, operating system, and applications. Further, the modules and data 804 can implement any of the functionality for the devices and components described and illustrated herein.

The computing device 800 may also have one or more processors 806. In various examples, each of the processors 806 may be a central processing unit (CPU), a graphics processing unit (GPU), both a CPU and a GPU, or any other type of processing unit. Each of the one or more processors 806 may have numerous arithmetic logic units (ALUs) that perform arithmetic and logical operations, as well as one or more control units (CUs) that extract instructions and stored content from processor cache memory, and then executes these instructions by calling on the ALUs, as necessary, during program execution. The processors 806 may also be responsible for executing computer applications stored in the memory 802, which may be associated with types of volatile and/or nonvolatile memory. For example, the processors 806 may access data and computer-executable instructions stored in the memory 802 and execute such computer-executable instructions.

The computing device 800 may also have one or more transceivers 808. The transceivers 808 may include modems, interfaces, antennas, telephone connections, and/or other components that may transmit and/or receive data over networks, telephone lines, or other connections, or that may transfer data to or from removable storage media or other elements connected to the transceivers 808.

In some examples, the computing device 800 may also have one or more input/output devices 810, such as a keyboard, a mouse, a touch-sensitive display, voice input device, a display, speakers, a printer, etc. These devices are well known in the art and need not be discussed at length here.

Although the subject matter has been described in language specific to structural features and/or methodological acts, it is to be understood that the subject matter is not necessarily limited to the specific features or acts described above. Rather, the specific features and acts described above are disclosed as example embodiments.

## Claims

1. A system comprising:
one or more processors; and
an artificial intelligence (AI) agent configured to be operated by the one or more processors in at least one of a plurality of roles, the roles including:
a white box role in which the AI agent receives notification of a vulnerability in source code of an application, generates a first exploit code for the vulnerability based on the source code and on at least one of context from past operations, large language model (LLM) predefined templates, or an embedding from an exploit code database, and provides the first exploit code for testing on the source code or on a patched code for the source code; and
a black box role in which the AI agent receives an indication of a target compiled code of the application, generates a second exploit code based on the target compiled code and on at least one of the context from past operations, the LLM predefined templates, or the embedding from the exploit code database, and provides the second exploit code for testing on the target compiled code.

2. The system of claim 1, wherein the AI agent is configured to:
learn based on results of testing on the source code or on the patched code in the white box role and based on results of testing on the target compiled code in the black box role; or
perform reconnaissance of locations and documents associated with the application to better understand the source code, the patched code, or the target compiled code and includes results of the reconnaissance in the context.

3. The system of any preceding claim, wherein, when in the black box role, when an exploit is found by the testing, the AI agent shares results of the testing with a human analyst.

4. The system of any preceding claim, wherein the AI agent does not know source code corresponding to the target compiled code when operating in the black box role.

5. The system of any preceding claim, wherein, when the AI agent is operating in the white box role, the context further or instead includes information about the application from associated documentation.

6. The system of any preceding claim, wherein the AI agent is a first AI agent, the notification is a first notification, and the system further comprises a second AI agent interacting with the first AI agent when the first AI agent is operating in the white box role, wherein the second AI agent:
receives a second notification of the vulnerability;
upon receiving the second notification, develops the patched code for the source code;
provides the patched code for testing; and
when the patched code passes testing, recommends the patched code or applies the patched code to the source code.

7. The system of claim 6, further comprising at least one of:
a testing block that interacts with the first AI agent when the first AI agent is operating in the white box role and with the second AI agent, wherein the testing block receives the patched code from the second AI agent and the exploit code from the first AI agent and tests the patched code using at least one of a unit test or the exploit code;
a third AI agent that interacts with the first AI agent when the first AI agent is operating in the white box role and with the second AI agent, wherein the third AI agent selects a source code analysis tool, determines the vulnerability, and provides the first notification and the second notification.

8. A method comprising:
receiving, by an artificial intelligence (AI) agent of one or more computing devices, an indication of a target compiled code of an application;
generating, by the AI agent, an exploit code based on the target compiled code and on at least one of context from past operations, large language model (LLM) predefined templates, or an embedding from an exploit code database; and
providing, by the AI agent, the exploit code for testing on the target compiled code.

9. The method of claim 8, further comprising performing, by the AI agent, a reconnaissance of locations and documents associated with the application to better understand the target compiled code and including results of the reconnaissance in the context.

10. The method of claim 8 or 9, further comprising at least one of:
when an exploit is found by the testing, sharing results of the testing with a human analyst;
wherein the AI agent does not know source code corresponding to the target compiled code;
further comprising, learning, by the AI agent, based on which exploit codes successfully exploit the target compiled code.

11. A method comprising:
receiving, by an artificial intelligence (AI) agent of one or more computing devices, a notification of a vulnerability in source code of an application;
generating, by the AI agent, an exploit code based on the source code and on at least one of context from past operations, large language model (LLM) predefined templates, or an embedding from an exploit code database; and
providing, by the AI agent, the exploit code for testing a patched code for the source code.

12. The method of claim 11, wherein the context further or instead includes information about the application from associated documentation.

13. The method of claim 11 or 12, wherein the AI agent is a first AI agent, the notification is a first notification, and the method further comprises:
receiving, by a second AI agent, a second notification of the vulnerability;
upon receiving the second notification, developing, by the second AI agent, the patched code for the source code;
providing, by the second AI agent, the patched code for testing; and
when the patched code passes testing, recommending, by the second AI agent, the patched code or applying the patched code to the source code.

14. The method of claim 13:
wherein the testing is performed by a testing block that receives the patched code from second AI agent and the exploit code from first AI agent and tests the patched code using at least one of a unit test or the exploit code; or
further comprising selecting, by a third AI agent, a source code analysis tool, determining, by the third AI agent, the vulnerability, and providing, by the third AI agent, the first notification and the second notification.

15. The method of claim 13 or 14, further comprising learning, by the AI agent, based on results of the testing.
